# EUROPÄISCHE PATENTSCHRIFT

(11) **EP 0 681 658 B1**
(45) Veröffentlichungstag und Bekanntmachung des Hinweises auf die Patenterteilung: **18.12.1996**
(21) Anmeldenummer: 94904639.5
(22) Anmeldetag: 07.01.1994
(51) Int. Cl.: F04D 29/16, F16J 15/44, F16C 33/10

(54) **SPALTRINGDICHTUNG**
SPLIT RING SEAL
BAGUE D'ETANCHEITE A FENTE

(30) Priorität: 29.01.1993 DE 4302492
(43) Veröffentlichungstag der Anmeldung: 15.11.1995
(73) Patentinhaber: KSB Aktiengesellschaft, 67227 Frankenthal (DE)
(72) Erfinder: SCHILL, Jürgen, D-67273 Weisenheim (DE)
(86) Internationale Anmeldenummer: EP9400028
(87) Internationale Veröffentlichungsnummer: WO9417310

(56) Entgegenhaltungen:
- FR-A- 1 279 999
- FR-A- 2 199 074
- US-A- 2 440 947
- SCHMID E. 'handbuch der dichtungstechnik' 1981 , EXPERT VERLAG , GRAFENAU siehe Seite 428 - Seite 445 siehe Seite 432, Absatz 1

## Beschreibung

Die Erfindung betrifft eine Spaltringdichtung gemäß dem Oberbegriff des Hauptanspruches.

Spaltringdichtungen dienen in Strömungsmaschinen zur Abdichtung von Räumen unterschiedlicher Drücke, wobei in einer Trennwand zwischen den Räumen ein rotierendes Element angeordnet ist. Bei dem rotierenden Element kann es sich um eine Welle, eine Nabe eines Laufrades, einen Saugmund eines Laufrades oder dgl. handeln. Die bekannten Spaltringe sind gewöhnlich als ein festes Ringelement ausgebildet und in das Gehäuse eingepreßt. Ein Laufradhals oder die Nabe eines Laufrades ist mit einem solchen Durchmesser im Innendurchmesser des Spaltringes angeordnet, daß während des Betriebes ein Anlaufen der einander gegenüberliegenden Teile verhindert wird. Der Spalt zwischen dem Spaltring und dem innerhalb desselben rotierenden Bauteils wirkt hierbei als Drossel zwischen den Räumen unterschiedlicher Drücke und verhindert einen zu hohen Förderstrom vom Raum höheren Druckes in den Raum niedrigeren Druckes. Je kleiner der Spalt zwischen dem Spaltring und dem darin gelagerten rotierenden Teil ist, desto geringer sind die Wirkungsgradverluste der Strömungsmaschine. Dem steht jedoch entgegen, daß ein zu kleiner Spalt sehr schwierig in Einklang mit den Fertigungstoleranzen sowie den betrieblichen Einflüssen zu bringen ist. Berührungen zwischen den Teilen sollen nicht auftreten, um Beschädigungen des damit ausgerüsteten Aggregates zu verhindern. Solche Spaltringdichtungen sind durch die US-A- 2 440 947 bekannt.

Eine andere Spaltringdichtungsbauart sieht vor, daß O-Ringe oder flache Teflonringe in einer Kammer beweglich angeordnet sind. Zum einen soll damit eine gewisse Nachgiebigkeit gegenüber Fertigungstoleranzen und Schwingungen erlangt werden und zum anderen vom höheren Druck eine dichtende Anpressung gegen die Trennwand bewirkt und somit der Spaltstrom reduziert werden.

Durch die FR-A-1 279 999 ist ein Gleitlager bekannt, dessen stillstehender Lagerring in Form eines Mehrgleitflächenlagers ausgebildet ist. Im Gegensatz dazu befindet sich die Konstruktion der FR-A-2 199 074, die ein eine Kreiselpumpe mit offenen Laufrädern zeigt. Spaltringdichtungen werden bei dieser Konstruktion überhaupt nicht verwendet. Die Pumpenwelle ist in zwei äußeren Lagern und einem zwischen den Pumpenstufen befindlichen hydrostatischen Lager gelagert. Als hydrostatischer Lagerdruck wirkt der Differenzdruck zwischen den Pumpenstufen.

Der Erfindung liegt das Problem zugrunde, bei mehrstufigen Strömungsmaschinen eine Einrichtung zur Stabilisierung des Rotors zu entwickeln. Die Lösung dieser Aufgabe erfolgt gemäß dem kennzeichnenden Teil des Hauptanspruches. Mittels dieser Lösung ist die dem rotierenden Teil zugekehrte Fläche des Spaltringes nicht wie üblich als Kreisringfläche, sondern als eine Vielfachfläche ausgebildet. Im Querschnitt betrachtet, wechseln sich Flächen mit einem großen und kleinen Krümmungsradius ab. Somit entstehen Zonen, bei denen sich zwischen dem rotierenden Teil und der stillstehenden Wandung sehr kleine Abstände einstellen. Infolge dieser geringen Abstände bauen sich in diesen kleinen Spalten mehrere über den Umfang verteilt angeordnete keilförmige Flüssigkeitspolster auf. Diese haben eine tragende, d. h. kräfteaufnehmende Funktion. Auf das rotierende Teil einwirkende Schwingungskräfte können damit aufgenommen und somit die Spaltringdichtung stabilisierend und schwingungsdämpfend für das rotierende Bauteil wirken.

Etwas ähnliches ist aus der Lagertechnik durch die DE-C-903 054 als sogenannte Frössel-Lager bekannt. Die Übertragung dieses Prinzips auf Spaltringe wurde jedoch als aussichtslos angesehen, da bei dieser Bauart ein wesentlich größerer Spaltquerschnitt besteht, als es bei den traditionellen Spaltringdichtungen üblich ist. Somit erschienen die Wirkungsgradeinbußen durch die höheren Spaltverluste als nicht akzeptabel. Praktische Versuche ergaben jedoch bei gleichen Wirkungsgraden ein erheblich verbessertes Schwingungsverhalten des Rotors. Der Übergangsradius zwischen den das keilförmige Flüssigkeitspolster auslösenden Flächen wird hierbei sehr klein gehalten. Auch durch eine größere Anzahl von Flächen läßt sich eine Querschnittsminimierung des Spaltes im Bereich der Flächenübergänge erreichen.

Nach einer Ausgestaltung der Erfindung ist bei größeren abzudichtenden Druckdifferenzen die Breite der polygonalen Spaltringfläche größer ausgeführt. Dies verhindert, daß die durch die Druckdifferenz innerhalb des Spaltes bestehende Querströmung überwiegt. Sich bildende, keilförmige Flüssigkeitspolster zwischen rotierendem und stillstehendem Teil würden andernfalls in ihrem Aufbau gestört werden oder könnten gar nicht erst zur Entstehung gelangen. Durch die bei größeren abzudichtenden Druckdifferenzen Anwendung findende größere Breite der Spaltringfläche wird dem entgegengewirkt.

Ein Ausführungsbeispiel der Erfindung ist in den Zeichnungen dargestellt und wird im folgenden näher beschrieben. Die
- Fig. 1: zeigt einen Ausschnitt aus einer mehrstufigen Kreiselpumpe und die
- Fig. 2: einen Querschnitt durch einen Spaltring mit darin eingezeichnetem Tragkräfteprofil.

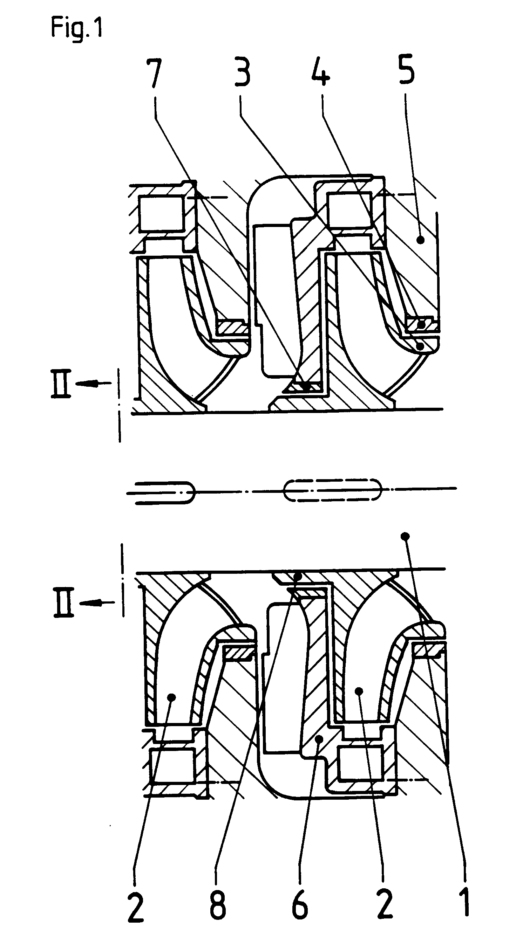

In der Fig. 1 ist ein Ausschnitt aus einer mehrstufigen Kreiselpumpe gezeigt. Darin sind auf einer Welle (1) zwei Laufräder (2) drehmomentübertragend befestigt. Der Laufradhals (3) der Laufräder taucht in einen Spaltring (4) ein, welcher im Stufengehäuse (5) verdrehsichernd befestigt ist. Eine dem Laufrad nachgeordnete Leiteinrichtung (6) weist im Bereich de Wellendurchgangs einen weiteren Spaltring (7) auf, welcher di Nabe (8) des Laufrades (2) umhüllt. Der Spaltring (7) ist auc als sogenannte Stufenbuchse bekannt.

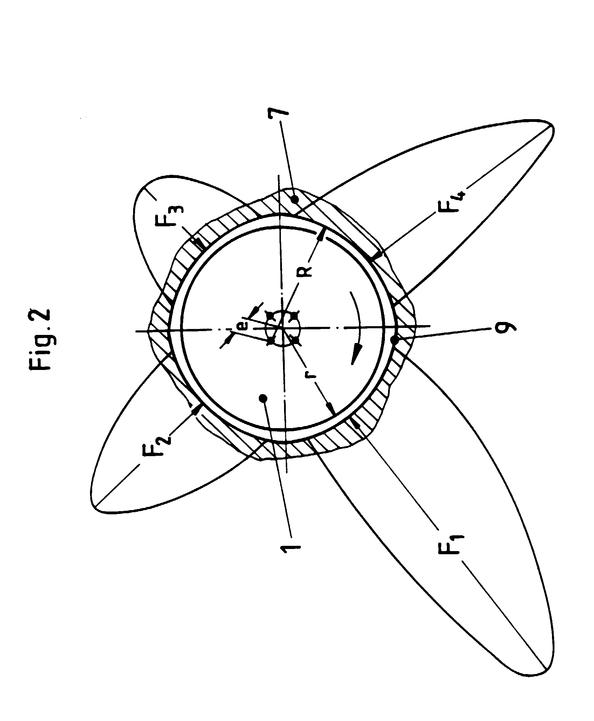

Die Fig. 2, welche einem Schnitt II-II aus Fig. 1 entspricht, zeigt in schematischer Darstellung einen Querschnitt durch einen Spaltring (7). Die polygonale Spaltringfläche (9) besteht hier aus vier Einzelflächen mit einem Krümmungsradius (R), wobei deren Mittelpunkt außerhalb der Wellenmitte liegt und größer als der Wellenradius (r) ist. Im Schnittpunkt einander benachbart liegender Einzelflächen erfolgt ein weicher Übergang mit kleinem Krümmungsradius. Aufgrund dieser gewählten Spaltringgeometrie weist die Welle (1) an vier, hier ungefähr 90° zueinander versetzt angeordneten Stellen, einen besonders engen Wellenspalt auf. Dadurch können sich an dieser Stelle keilförmige Flüssigkeitspolster bilden - hier nicht dargestellt - deren Tragkräfte stabilisierend auf die innerhalb des Spaltringes rotierende Welle bzw. das darin rotierende Laufrad einwirken. Die Tragkräfte sind durch Pfeile (F₁ - F₄) dargestellt. Deren Länge entspricht der Größe der Lagerkräfte. Die den jeweiligen Pfeil einhüllende Kurve entspricht dem Tragkraftanteil der jeweiligen Fläche.

Das gesamte rotierende System wird sehr stabil innerhalb der Strömungsmaschine positioniert. Wie sich gezeigt hat, wird damit auch ein sogenanntes Wellenklettern zuverlässig verhindert. Auch lassen sich mit Hilfe dieser Maßnahme sogenannte Halbfrequenzwirbel unterdrücken, wodurch die Laufruhe des gesamten Aggregates erheblich verbessert wird. Halbfrequenzwirbel verhindern die Ausbildung von stabilen Kräfteverteilungen innerhalb des durchströmten Spaltes. Ein davon beeinflußtes rotierendes Bauteil verändert daher während des Betriebes seine Position. Ein weiterer zusätzlicher Vorteil besteht darin, daß präzisere rotordynamische Berechnungen durchführbar werden.

## Patentansprüche

1. Kreiselpumpe mit einer Spaltringdichtung, bestehend aus einem in einem stillstehenden Gehäuseteil (5, 6) verdrehsichernd angeordneten Spaltring (4, 7), wobei sich innerhalb des Spaltringes (4, 7) ein rotierendes Bauteil (2, 3, 8) befindet, zwischen Spaltring und dem innerhalb desselben rotierenden Bauteil ein Spalt ausgebildet ist und beiderseits des Spaltes Räume unterschiedlichen Druckes vorhanden sind, **dadurch gekennzeichnet**, daß die dem rotierenden Teil (2, 3, 8) zugekehrte Fläche des Spaltringes (4, 7) als stillstehende polygonale Spaltringfläche (9) ausgebildet ist.

2. Kreiselpumpe nach Anspruch 1, dadurch gekennzeichnet, daß der Spalt am Laufradhals (3) angeordnet ist.

3. Kreiselpumpe nach Anspruch 1, dadurch gekennzeichnet, daß der Spalt an der Laufradnabe (8) angeordnet ist.

4. Kreiselpumpe nach einem der Ansprüche 1 bis 3, dadurch gekennzeichnet, daß die Kreiselpumpe mehrstufig ausgebildet ist.

5. Kreiselpumpe nach einem der Ansprüche 1 bis 4, dadurch gekennzeichnet, daß bei größeren abzudichtenden Druckdifferenzen die Breite der polygonalen Spaltringfläche (9) größer ausgeführt ist.

## Claims

1. Centrifugal pump having a split-ring seal, comprising a split ring (4, 7) arranged secure against rotation in a stationary housing part (5, 6), a rotating component (2, 3, 8) being located inside the split ring (4, 7), a gap being formed between the split ring and the component rotating inside the latter, and spaces at different pressure being present on the two sides of the gap, characterized in that the face of the split ring (4, 7) which faces the rotating part (2, 3, 8) is constructed as a stationary polygonal split-ring face (9).

2. Centrifugal pump according to Claim 1, characterized in that the gap is arranged on the impeller neck (3).

3. Centrifugal pump according to Claim 1, characterized in that the gap is arranged on the impeller hub (8).

4. Centrifugal pump according to one of Claims 1 to 3, characterized in that the centrifugal pump is constructed in a multi-stage fashion.

5. Centrifugal pump according to one of Claims 1 to 4, characterized in that the width of the polygonal split-ring face (9) is designed to be larger in the case of larger pressure differences to be sealed.

## Revendications

1. Pompe centrifuge comportant un joint d'étanchéité torique à fente, constitué d'une bague (4,7) à fente montée dans une partie de corps (5,6) fixe de manière à être protégée contre la torsion, une pièce (2,3,8) rotative se trouvant à l'intérieur de la bague (4,7) à fente, une fente étant formée entre la bague à fente et l'intérieur de cette même pièce rotative et des chambres de pression différentes étant prévues des deux côtés de la fente, caractérisée en ce que la face de la bague (4,7) à fente tournée vers la pièce (2,3,8) rotative est formée en tant que surface (9) de bague à fente polygonale fixe.

2. Pompe centrifuge suivant la revendication 1, caractérisée en ce que la fente est disposée au col (3) de roue.

3. Pompe centrifuge suivant la revendication 1, caractérisée en ce que la fente est disposée au moyen de la roue.

4. Pompe centrifuge suivant l'une des revendications 1 à 3, caractérisée en ce que la pompe centrifuge est formée à plusieurs étages.

5. Pompe centrifuge suivant l'une des revendications 1 à 4, caractérisée en ce que lorsqu'il faut assurer l'étanchéité pour une différence de pression plus grande, la largeur de la face (9) de bague à fente polygonale est prévue plus grande.
